# EUROPÄISCHE PATENTANMELDUNG

(11) **EP 1 801 246 A2**
(43) Veröffentlichungstag der Anmeldung: **27.06.2007**
(21) Anmeldenummer: 06126757.1
(22) Anmeldetag: 21.12.2006
(51) Int. Cl.: C22B 7/00, C22B 15/00

(54) **Verfahren und Vorrichtung zum Abtrennen von Metall/Kunststoff-Verbunden bei der Wiederverwertung von Elektroaltgeräten**

(30) Priorität: 23.12.2005 DE 102005061937
(71) Anmelder: EGN Entsorgungsgesellschaft Niederrhein mbH, 41515 Grevenbroich (DE)
(72) Erfinder: Nisters, Thomas, 42334, Nettetal (DE); Hochhausen, Peter, 41468, Neuss (DE)
(74) Vertreter: Cohausz & Florack

(57) **Zusammenfassung**

Dargestellt und beschrieben ist ein Verfahren zum Abtrennen von Metall/Kunststoff-Verbunden, vorzugsweise Platinen, zur stofflichen Verwertung von Elektroaltgeräten. Damit Metall/Kunststoff-Verbunde, die im Wesentlichen Platinen, Platinenbruchstücke und vergleichbare Gegenstände darstellen, mit einem vertretbaren Aufwand und gleichzeitig mit einer hohen Reinheit abgetrennt werden können, werden die Schritte Mechanische Zerkleinerung der Elektroaltgeräte, Trennen der zerkleinerten Elektroaltgeräte in eine Metallteile und die Metall/Kunststoff-Verbunde aufweisende Metallfraktion und eine Nichtmetallfraktion, Zuführen der Metallfraktion zu einem optoelektronischen Sensormodul, Erkennen der Metall/Kunststoff-Verbunde in der Metallfraktion und Separieren der erkannten Metall/Kunststoff-Verbunde aus der Metallfraktion vorgeschlagen.

## Beschreibung

Die Erfindung betrifft ein Verfahren zum Abtrennen von Metall/Kunststoff-Verbunden, vorzugsweise Platinen, zur stofflichen Verwertung von Elektroaltgeräten sowie eine Vorrichtung zur Durchführung eines solchen Verfahrens.

Verfahren zum Abtrennen von Wertstoffraktionen bei der stofflichen Verwertung von Elektroaltgeräten sind aus der Praxis seit geraumer Zeit bekannt. Bei diesen Verfahren werden die Elektroaltgeräte zunächst zerkleinert. Anschließend werden die zerkleinerten Elektroaltgeräte nach ihrer Partikelgröße, ihrem spezifischen Gewicht, ihren magnetischen Eigenschaften und/oder nach ihrer Form getrennt. Durch eine Vielzahl nacheinander durchgeführter Verfahrensschritte der vorgenannten Art, können letztlich unterschiedliche Metallfraktionen, vermischte Kunststofffraktionen und dergleichen erhalten werden.

Eine gezielte Rückgewinnung von speziellen Metall/Kunststoff-Verbunden, wie sie bei der stofflichen Verwertung von Elektroaltgeräten insbesondere in Form von Platinen und vergleichbaren Bauteilen anfallen, erfolgt in der Praxis etwa bei der Durchführung von Verfahren der zuvor genannten Art, indem die Metall/Kunststoff-Verbunde in einem zusätzlichen Zwischenschritt von Hand aussortiert werden.

Platinen, die auch als Leiterplatten bezeichnet werden, bestehen in der Regel aus einer Kupferschicht, die auf elektrisch isolierenden Trägermaterialien wie mit Epoxidharz getränkten Glasfasermatten vorgesehen ist. Für Spezialanwendungen kommen auch andere Materialien wie beispielsweise Teflon oder Keramik zum Einsatz. Neben Kupfer können Platinen auch weitere Metalle wie Nickel oder Gold enthalten. Im Zusammenhang mit der Wertstoffrückgewinnung aus Elektroaltgeräten werden unter dem Begriff Platinen in der Regel auch mit Bauteilen versehene, sogenannte bestückte Platinen verstanden. Die Bauteile weisen ebenfalls verschiedene Metalle und Kunststoffe, insbesondere Duroplasten auf.

Im Folgenden werden unter Metall/Kunststoff-Verbunden neben Platinen allgemein solche Verbundstoffe verstanden, die eine ähnliche Zusammensetzung wie Platinen aufweisen und vorzugsweise Kunststoffe und Nichteisenmetalle enthalten.

Wenn nachfolgend der Einfachheit halber lediglich von Elektroaltgeräten die Rede ist, so bezieht sich dieser Begriff aber selbstverständlich auch auf Elektronikaltgeräte und im weiteren Sinne auf all solche Gegenstände, welche zur stofflichen Verwertung vorgesehen sind und einen nennenswerten Anteil an Metall/Kunststoff-Verbunden aufweisen.

Nachteilig an den bekannten Verfahren ist, dass die Metall/Kunststoff-Verbunde nur mit einem hohen manuellen Aufwand abgetrennt werden können. Eine maschinelle Abtrennung der Metall/Kunststoff-Verbunde ist zwar grundsätzlich denkbar, wäre dann aber mit einem sehr hohen apparativen Aufwand verbunden. Zudem könnten mit bestehenden Verfahren oder Vorrichtungen die Metall/Kunststoff-Verbunde nicht mit einer zufriedenstellenden Reinheit abgetrennt werden.

Der Erfindung liegt daher die Aufgabe zugrunde, das eingangs genannte und zuvor näher beschriebene Verfahren so auszugestalten und weiterzubilden, dass Metall/Kunststoff-Verbunde, die im Wesentlichen Platinen, Platinenbruchstücke und vergleichbare Gegenstände darstellen, mit einem vertretbaren Aufwand und gleichzeitig mit einer hohen Reinheit abgetrennt werden können.

Diese Aufgabe wird bei einem Verfahren zum Abtrennen von Metall/Kunststoff-Verbunden, vorzugsweise Platinen, bei der stofflichen Verwertung von Elektroaltgeräten durch die folgenden, nacheinander durchgeführten Schritte gelöst:
- Mechanische Zerkleinerung der Elektroaltgeräte,
- Trennen der zerkleinerten Elektroaltgeräte in eine Metallteile und die Metall/Kunststoff-Verbunde aufweisende Metallfraktion und eine Nichtmetallfraktion,
- Zuführen der Metallfraktion zu einem optoelektronischen Sensormodul,
- Erkennen der Metall/Kunststoff-Verbunde in der Metallfraktion und
- Abtrennen der erkannten Metall/Kunststoff-Verbunde aus der Metallfraktion.

Das Zerkleinern der Elektroaltgeräte erfolgt nicht wie üblich unspezifisch mit dem Ziel, möglichst kleine Partikel zu erhalten, die dann mit höherer Wahrscheinlichkeit aus bloß einem einzigen Material bestehen, was die Wertstoffrückgewinnung fördert, sondern gerade so, dass einerseits die Metall/Kunststoff-Verbunde und andererseits zusätzlich noch Kunststofffraktionen bzw. Metallfraktionen als solche aus den zerkleinerten Elektroaltgeräten wiedergewonnen werden können.

Das erfindungsgemäße Verfahren zeichnet sich zudem im Wesentlichen durch eine automatische Abtrennung der Metall/Kunststoff-Verbunde und eine verhältnismäßig geringe Anzahl an Verfahrensstufen insgesamt aus. Nicht zuletzt verringert sich durch die Erfindung auch der sonst übliche Aufwand zur manuellen Sortierung.

Bei einer bevorzugten Ausgestaltung der Erfindung werden die Elektroaltgeräte mit einem Querstromzerspaner zerkleinert. Durch eine solche Zerkleinerung können einerseits Bruchstücke einer geeigneten Größe und Form erhalten werden. Andererseits werden Platinen und dergleichen nicht zu stark zerkleinert.

Nach dem Zerkleinern der Elektroaltgeräte kann eine Klassierung vorgesehen sein, durch die wahlweise eine Feinkornfraktion oder eine Grobkornfraktion abgetrennt werden kann. Selbstverständlich kann die Klassierung auch derart erfolgen, dass sowohl eine Fein- als auch eine Grobkornfraktion abgetrennt wird, denn diese Fraktionen können für nachfolgende Verfahrensschritte Störstoffe darstellen. Die Klassierung, also die Trennung nach Korngröße, kann grundsätzlich nach allen bekannten Verfahren durchgeführt werden.

Besonders zweckmäßig ist in diesem Zusammenhang die Verwendung von Siebelementen, so dass der Strom der zerkleinerten Elektroaltgeräte mit einem bestimmten oberen und unteren Siebschnitt an die nachfolgende Verfahrensstufe weitergegeben werden kann.

Bei einer weiteren Lehre der Erfindung erfolgt die Zerkleinerung und gegebenenfalls die Klassierung derart, dass die zerkleinerten Elektroaltgeräte mit einer Partikelgröße von kleiner 200 mm aus der Zerkleinerung oder der Klassierung austreten und der nachgeschalteten Trenneinrichtung übergeben werden. Bevorzugt können auch nur zerkleinerte Elektroaltgeräte mit einer Partikelgröße von kleiner 150 mm aus der Zerkleinerung oder der Klassierung austreten.

Alternativ oder zusätzlich kann vorgesehen sein, die zerkleinerten Elektroaltgeräte mit einer Partikelgröße von größer 10 mm der Trennung in Metallfraktion und Nichtmetallfraktion zuzuführen. Bevorzugt werden aber nur Partikel größer 20 mm der Trennung in Metallfraktion und Nichtmetallfraktion zugeführt.

Gemäß einer weiteren Ausgestaltung der Erfindung wird die Metallfraktion von einem Allmetallabscheider abgetrennt. Es wird also nicht weiter zwischen Eisen- und Nichteisenmetallen unterschieden, wodurch die Anzahl der Verfahrensstufen verringert werden kann. Da die Metall/Kunststoff-Verbunde in der Regel keine oder nur sehr geringe Anteile an Eisenmetallen aufweisen, kann je nach Zusammensetzung der Elektroaltgeräte durch eine nachfolgende Abtrennung der Metall/Kunststoff-Verbunde gleichzeitig bereits eine verhältnismäßig reine Fraktion aus Metallen erhalten werden.

Selbstverständlich kann auch eine zusätzliche Abtrennung der Eisenmetalle vor der Trennung in eine Metallfraktion und eine Nichtmetallfraktion erfolgen. Die Eisenmetalle werden dann vorzugsweise mit einem magnetischen Trennmodul abgetrennt. Dies bietet sich insbesondere bei Elektroaltgeräten an, die neben den Metall/Kunststoff-Verbunden noch größere Anteile an Eisen- sowie Nichteisenmetallen aufweisen.

Im Falle einer vorgeschalteten Eisenmetallabscheidung kann zur nachgelagerten Trennung in eine Nichtmetallfraktion und eine Metallfraktion, welche nun im Wesentlichen Nichteisenmetalle enthält, ein induktives Trennmodul verwendet werden. Derartige induktive Trennmodule werden auch als Nichteisenmetallabscheider bezeichnet. Vorzugsweise ist das induktive Trennmodul ein sogenannter Wirbelstromscheider. Eisenmetalle können dann nicht mehr zu Problemen führen, insbesondere nicht vom Magnetfeld magnetischer Trommeln angezogen werden.

Damit die Metall/Kunststoff-Verbunde auch bei sehr unterschiedlichen, dem Verfahren zugeführten Elektroaltgeräten zuverlässig abgetrennt werden können, bietet es sich an, ein Sensormodul mit einem NIR-Sensor (near infra red) zu verwenden. Derartige Sensoren sind für sich bekannt und ermöglichen eine hohe Selektivität bei der Erkennung von Metall/Kunststoff-Verbunden unter den gegebenen Prozessbedingungen.

Ferner können auch in der Nichtmetallfraktion mittels eines NIR-Sensors bestimmte Kunststoffe erkannt und ferner mittels einer Separierungseinrichtung im Wesentlichen als sortenreine Kunststoffe in hoher Qualität aussortiert werden. Diese Kunststoffe können dann einer Wiederverwertung zugeführt werden.

Vorrichtungsgemäß wird die eingangs genannte Aufgabe gelöst durch eine Vorrichtung der eingangs genannten Art mit einer mechanischen Zerkleinerungseinrichtung, einer Trenneinrichtung zur Trennung der zerkleinerten Elektroaltgeräte in eine Metallteile und Metall/Kunststoff-Verbunde aufweisende Metallfraktion und eine Nichtmetallfraktion, einem optoelektronischen Sensormodul zur Erkennung von Metall/Kunststoff-Verbunden in der Metallfraktion und eine Separierungseinrichtung zum Separieren der vom Sensormodul erkannten Metall/Kunststoff-Verbunde.

Die erfindungsgemäße Vorrichtung dient vorzugsweise der Durchführung des zuvor beschriebenen und insoweit bevorzugten Verfahrens. Jedenfalls werden mit der erfindungsgemäßen Vorrichtung im Wesentlichen die gleichen Vorteile erzielt wie mit dem erfindungsgemäßen Verfahren.

Dabei ist bei einer bevorzugten Ausgestaltung der Vorrichtung zur Zerkleinerung der Elektroaltgeräte ein Querstromzerspaner vorgesehen. Damit können dann für die weitere Aufbereitung in besonderer Weise geeignete Bruchstücke der Elektroaltgeräte erhalten werden.

Als Trenneinrichtung zur Abtrennung der Metallfraktion von der Nichtmetallfraktion ist ein Allmetallabscheider bevorzugt. Dieser umfasst vorzugsweise ein Förderband oder dergleichen, auf dem die Metallfraktion transportiert wird. Unter dem Förderband befinden sich stromdurchflossene Spulen. Während des Transports der einzelnen Partikel an den Spulen vorbei wird die Induktivität oder ein durch die Induktivität der Partikel beeinflusster Wert gemessen. Die auf diese Weise erkannten Metalle und Metall/Kunststoff-Verbunde werden anschließend von den Nichtmetallen getrennt. Diese Abtrennung erfolgt vorzugsweise durch einen Druckluftstoß, der auf die Metalle und Metall/Kunststoff-Verbunde gerichtet wird. Durch die Druckluftstöß werden die Metalle und Metall/Kunststoff-Verbunde in eine andere Transportrichtung abgelenkt als die Nichtmetalle. Die Metalle und Metall/Kunststoff-Verbunde werden mit anderen Worten vom Förderband geblasen.

Selbstverständlich wird dieses von der Steuer- oder Regelungseinrichtung eingeleitet. Die Erfassung und die Drucklufteinrichtung zum Ausschleusen der Metalle und Metall/Kunststoff-Verbunde sind vorzugsweise an die Steuer- oder Regelungseinrichtung angeschlossen.

Sofern die von der Nichtmetallfraktion abzutrennende Metallfraktion ausschließlich Nichteisenmetalle enthalten soll, kann vorgesehen sein, dass der Trenneinrichtung eine zusätzliche Eisenmetallabtrennung vorgeschaltet angeordnet ist. Diese weist dann vorzugsweise ein magnetisches Trennmodul auf.

Sind die Eisenmetalle vorzeitig abgetrennt worden, kann in der Trenneinrichtung auch ein induktives Trennmodul wie beispielsweise ein Wirbelstromscheider verwendet werden. Es ist jedoch grundsätzlich etwa zur Verringerung der Verfahrensstufen oder wegen der höheren Effektivität bzw. Wirtschaftlichkeit bevorzugt, mit oder ohne Eisenmetallabscheidung eine Trenneinrichtung mit einem Allmetallabscheider vorzusehen.

Das Sensormodul ist alternativ oder zusätzlich vorzugsweise mit einem NIR-Sensor ausgerüstet. Das Sensormodul wirkt jedoch in jedem Fall mit einer Steuer- oder Regelungseinrichtung zusammen, damit die als Metall/Kunststoff-Verbunde erkannten Teile der Metallfraktion gezielt abgetrennt werden können. Diese Abtrennung erfolgt vorzugsweise durch einen Druckluftstoß, der auf die Metall/Kunststoff-Verbunde gerichtet wird und deren weitere Transportrichtung beeinflusst. Letztlich werden die Metall/Kunststoff-Verbunde mit Druckluft in Richtung einer Auffangeinrichtung befördert. Selbstverständlich wird dieses von der Steuer- oder Regelungseinrichtung eingeleitet.

Bevorzugt werden das Sensormodul und die vorzugsweise mit Druckluft betriebene Separierungseinrichtung zu einer Baugruppe zusammengefasst sein. Dies spart einerseits Materialkosten und ist andererseits bei der Montage zweckmäßiger. Im Übrigen kann das Separieren der erkannten Metall/Kunststoff-Verbunde unmittelbar nach dem Erkennen derselben durch das Sensormodul erfolgen.

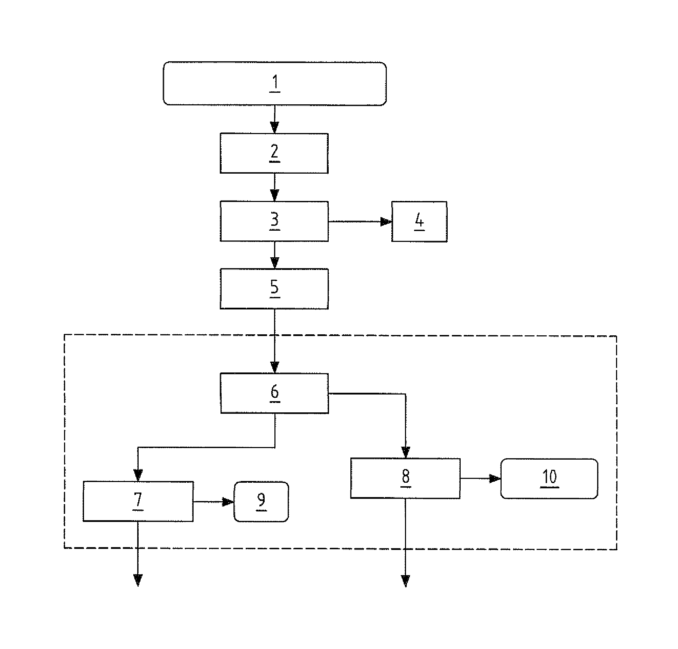

Nachfolgend wird die Erfindung anhand einer lediglich ein Ausführungsbeispiel darstellenden Zeichnung näher erläutert. Die einzige Figur zeigt ein Ablaufschema einer möglichen Anordnung eines erfindungsgemäßen Verfahrens. Das Ablaufschema gibt zugleich schematisch den grundsätzlichen Aufbau eines Ausführungsbeispiels einer erfindungsgemäßen Vorrichtung wieder.

Bei dem in der einzigen Figur dargestellten und insoweit bevorzugten Verfahrensablauf beginnt das Verfahren zur Abtrennung von Metall/Kunststoff-Verbunden mit dem Aufgeben von Elektroaltgeräten in eine Aufgabe 1. Die aufgegebenen Elektroaltgeräte werden anschließend einer Zerkleinerungseinrichtung 2 zugeführt. Dort werden die Elektroaltgeräte dann bei dem dargestellten und insoweit bevorzugten Verfahren in einem Querstromzerspaner zerkleinert.

Dabei werden die Elektroaltgeräte zu Bruchstücken zerkleinert, die überwiegend kleiner als 150 mm sind. Über eine Klassiereinrichtung 3 werden Bruchstücke, die kleiner als 20 mm sind, abgesiebt. Die so gewonnene Feinfraktion wird in einem Zwischenlager 4 zwischengelagert und anschließend in einem separaten Verfahren weiter aufbereitet. Da ein Großteil der zerkleinerten Elektroaltgeräte aus Eisenmetallen bestehen kann, ist bei dem dargestellten und insoweit bevorzugten Ausführungsbeispiel ein magnetisches Trennmodul 5 zur Abtrennung massiver eisenhaltiger Bruchstücke vorgesehen.

Die durch die Klassierungseinrichtung 3 vorkonfektionierten zerkleinerten Elektroaltgeräte gelangen anschließend zu einer Trenneinrichtung 6. Dort erfolgt eine Auftrennung des Materialstroms in eine Metallfraktion und eine Nichtmetallfraktion, wobei die Metallfraktion neben reinen Metallen auch noch die Metall/Kunststoff-Verbunde enthält. Die Trennung als solche erfolgt mittels eines sogenannten Allmetallabscheiders, mit dem sowohl Eisenmetalle, Nichteisenmetalle und Metall/Kunststoff-Verbunde selektiv als Metallfraktion abgetrennt werden.

Aus der Trenneinrichtung 6 tritt letztlich die Metallfraktion und die Nichtmetallfraktion aus, die beide zur Weiterbehandlung unterschiedlichen Verfahrensstufen zugeführt werden. In beiden Fällen sind die nachfolgenden Verfahrensstufen mit Sensormodulen 7, 8 mit speziellen NIR-Sensoren zur selektiven Erkennung einzelner Kunststoffe bzw. der Metall/Kunststoff-Verbunde in den entsprechenden Fraktionen ausgestattet.

Die von den Sensoren erkannten Kunststoffe bzw. Metall/Kunststoff-Verbunde werden vorzugsweise unmittelbar nach dem sie den Sensor passiert haben mit einem Druckluftstoß beaufschlagt, woraufhin die Kunststoffe bzw. die Metall/Kunststoff-Verbunde abgelenkt werden und in entsprechenden Auffangeinrichtungen 9, 10 gesammelt werden.

Die Wertstoffraktionen in den Auffangeinrichtungen und gegebenenfalls auch die die Anlage verlassenden Reststoffe können bedarfsweise mittels anderer Verfahren weiter aufgearbeitet werden.

## Patentansprüche

1. Verfahren zum Abtrennen von Metall/Kunststoff-Verbunden, vorzugsweise Platinen, zur stofflichen Verwertung von Elektroaltgeräten,
**gekennzeichnet durch** die folgenden, nacheinander durchgeführten Schritte:
- Mechanische Zerkleinerung der Elektroaltgeräte,
- Trennen der zerkleinerten Elektroaltgeräte in eine Metallteile und die Metall/Kunststoff-Verbunde aufweisende Metallfraktion und eine Nichtmetallfraktion,
- Zuführen der Metallfraktion zu einem optoelektronischen Sensormodul (7),
- Erkennen der Metall/Kunststoff-Verbunde in der Metallfraktion und
- Separieren der erkannten Metall/Kunststoff-Verbunde aus der Metallfraktion.

2. Verfahren nach Anspruch 1,
**dadurch gekennzeichnet, dass**
die Elektroaltgeräte mit einem Querstromzerspaner zerkleinert werden.

3. Verfahren nach Anspruch 1 oder 2,
**dadurch gekennzeichnet, dass**
die zerkleinerten Elektrogeräte gesiebt werden.

4. Verfahren nach einem der Ansprüche 1 bis 3,
**dadurch gekennzeichnet, dass**
die zerkleinerten Elektroaltgeräte mit einer Partikelgröße von kleiner 200 mm der Trennung in Metallfraktion und Nichtmetallfraktion zugeführt werden.

5. Verfahren nach Anspruch 4,
**dadurch gekennzeichnet, dass**
die zerkleinerten Elektroaltgeräte mit einer Partikelgröße von kleiner 150 mm der Trennung in Metallfraktion und Nichtmetallfraktion zugeführt werden.

6. Verfahren nach einem der Ansprüche 1 bis 5,
**dadurch gekennzeichnet, dass**
die zerkleinerten Elektroaltgeräte mit einer Partikelgröße von größer 10 mm der Trennung in Metallfraktion und Nichtmetallfraktion zugeführt werden.

7. Verfahren nach Anspruch 6,
**dadurch gekennzeichnet, dass**
die zerkleinerten Elektroaltgeräte mit einer Partikelgröße von größer 20 mm der Trennung in Metallfraktion und Nichtmetallfraktion zugeführt werden.

8. Verfahren nach einem der Ansprüche 1 bis 7,
**dadurch gekennzeichnet, dass**
die Metallfraktion von einem Allmetallabscheider abgetrennt wird.

9. Verfahren nach einem der Ansprüche 1 bis 8,
**dadurch gekennzeichnet, dass**
vor der Trennung in eine Metallfraktion und eine Nichtmetallfraktion Eisenmetalle abgetrennt werden.

10. Verfahren nach einem der Ansprüche 1 bis 9,
**dadurch gekennzeichnet, dass**
das Sensormodul (7) mit einem NIR-Sensor arbeitet.

11. Verfahren nach einem der Ansprüche 1 bis 10,
**dadurch gekennzeichnet, dass**
von einem weiteren optoelektronischen Senormodul unterschiedliche Kunststoffe in der Nichtmetallfraktion erkannt werden.

12. Verfahren nach Anspruch 11,
**dadurch gekennzeichnet, dass**
die erkannten Kunststoffe der Nichtmetallfraktion separiert werden.

13. Vorrichtung zur Durchführung des Verfahrens nach einem der Ansprüche 1 bis 12, mit einer mechanischen Zerkleinerungseinrichtung (2), einer Trenneinrichtung (6) zur Trennung der zerkleinerten Elektroaltgeräte in eine Metallteile und Metall/Kunststoff-Verbunde aufweisende Metallfraktion und eine Nichtmetallfraktion, einem optoelektronischen Sensormodul (7) zur Erkennung von Metall/Kunststoff-Verbunden in der Metallfraktion und einer Separierungseinrichtung zum Separieren der vom Sensormodul (7) erkannten Metall/Kunststoff-Verbunde.

14. Vorrichtung nach Anspruch 13,
**dadurch gekennzeichnet, dass**
als Zerkleinerungseinrichtung (2) ein Querstromzerspaner vorgesehen ist.

15. Vorrichtung nach Anspruch 13 oder 14,
**dadurch gekennzeichnet, dass**
als Trenneinrichtung (6) zur Abtrennung der Metallfraktion ein Allmetallabscheider vorgesehen ist.

16. Vorrichtung nach einem der Ansprüche 13 bis 15,
**dadurch gekennzeichnet, dass**
der Trenneinrichtung (6) vorgeschaltet zur Abtrennung von Eisenmetallen ein magnetisches Trennmodul (5) angeordnet ist.

17. Vorrichtung nach Anspruch 16,
**dadurch gekennzeichnet, dass**
als Trenneinrichtung (6) zur Abtrennung der Metallfraktion ein induktives Trennmodul vorgesehen ist.

18. Vorrichtung nach einem der Ansprüche 14 bis 17,
**dadurch gekennzeichnet, dass**
das Sensormodul (7) einen NIR-Sensor aufweist.

19. Vorrichtung nach einem der Ansprüche 14 bis 18,
**dadurch gekennzeichnet, dass**
eine pneumatische Ablenkeinrichtung zum Ablenken und Separieren der erkannten Metall-/Kunststoffverbunde vorgesehen ist.

20. Vorrichtung nach einem der Ansprüche 14 bis 19,
**dadurch gekennzeichnet, dass**
das Sensormodul (7) und die Separierungseinrichtung zu einer gemeinsamen Baugruppe zusammengefasst sind.
